# EUROPEAN PATENT SPECIFICATION

(11) **EP 1 329 891 B1**
(45) Date of publication and mention of the grant of the patent: **03.09.2008**
(21) Application number: 02258920.4
(22) Date of filing: 20.12.2002
(51) Int. Cl.: G11B 25/06, G11B 15/61

(54) **Tape deck with integrally formed head drum mounting**
Bandlaufwerk mit angeformter Kopftrommelmontageanordnung
Appareil à bande avec support de tambour à têtes formé d'une seule pièce

(30) Priority: 18.01.2002 KR 2002003125
(43) Date of publication of application: 23.07.2003
(73) Proprietor: SAMSUNG ELECTRONICS CO., LTD., Suwon-si, Gyeonggi-do 442-742 (KR)
(72) Inventor: Oh, Jeong-hyeob, 309-1005 Daewon Apartment, Anyang-city, Gyunggi-do (KR); Kim, Bong-joo, Suwon-city, Gyunggi-do (KR); Choi, Do-young 715-1801, Hyundai Seongwoo Aprt., Jangan-gu, Suwon-si Gyeonggi-do (KR); Lee, Seung-woo, 542-106 Shinnamooshil Ssangyong ap, Suwon-city, Gyunggi-do (KR); Kim, Jun-young, 212-1301 Hanguk Apartment, Suwon-city, Gyunggi-do (KR); Choi, Hyeong-seok, 250-1404 Hwanggol Maeul Ssang., Suwon-city, Gyunggi-do (KR); Cho, Young-ho, Suwon-city, Gyunggi-do (KR)
(74) Representative: Geary, Stuart Lloyd

(56) References cited:
- EP-A- 0 204 487
- EP-A- 0 780 835
- US-A- 5 330 123
- US-A1- 2001 013 995
- PATENT ABSTRACTS OF JAPAN vol. 011, no. 153 (P-577), 19 May 1987 (1987-05-19) & JP 61 287092 A (HITACHI LTD), 17 December 1986 (1986-12-17)
- PATENT ABSTRACTS OF JAPAN vol. 010, no. 169 (P-468), 14 June 1986 (1986-06-14) & JP 61 020286 A (HITACHI SEISAKUSHO KK), 29 January 1986 (1986-01-29)
- PATENT ABSTRACTS OF JAPAN vol. 2000, no. 19, 5 June 2001 (2001-06-05) & JP 2001 035143 A (SHARP CORP), 9 February 2001 (2001-02-09)

## Description

The present invention relates to a tape deck comprising a substantially planar main chassis and a head drum mounted slantingly to the main chassis.

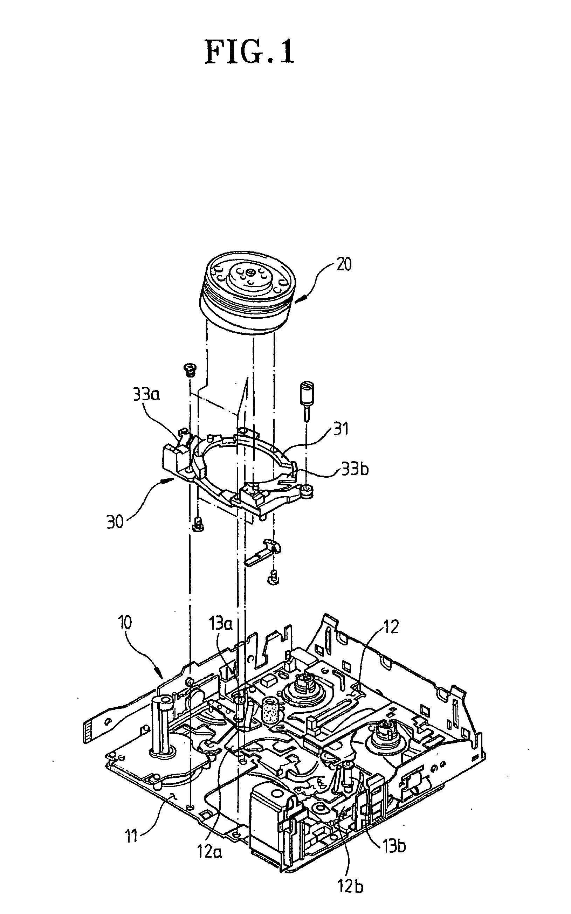

Camcorders generally include a deck 10 which has a head drum assembly 20 that rotates at high speed on its main chassis 11, as shown in Figure 1, for recoding and playback of data from a travelling magnetic tape.

Figure 1 shows the major part of the deck of a typical camcorder, in which the head drum assembly 20 is slantingly positioned on the main chassis 11, with the head drum assembly 20 being seated on a drum base 30.

This construction allows stable running of the magnetic tape by use of the head drum assembly 20 of the helical-scan type. The drum base 30 includes a ring-shaped base member 31 and a pair of integral stationary guide rails 33a, 33b located on opposite sides of the ring-shaped base member 31. The drum base 30 is manufactured separately, for example by die casting, from the main chassis 11 and the head drum assembly 20.

The stationary guide rails 33a, 33b define path along which a pair of pole bases 13a, 13b move in co-operation with a pair of movable guide rails 12a, 12b. The movable guide rails 12a, 12b are provided at the front of a sub-chassis 12. When the sub-chassis 12 is slid toward the head drum assembly 20 during loading of a tape cassette (not shown), the movable guide rails 12a, 12b are docked with respective stationary guide rails 33a, 33b. The pole bases 13a, 13b draw the magnetic tape (not shown) from the tape cassette and then move along the movable guide rails 12a, 12b and the stationary guide rails 33a, 33b. Thus, the magnetic tape is brought into close contact with the head drum assembly 20, with the magnetic tape being wound halfway around the head drum assembly 20.

EP-A-0 204 487 describes a deck plate apparatus similar to that described above. JP 61 287092, US 2001/013995, EP-A-0 780 835, US-A-5 330 123, JP 61 020286 and JP 2001 035143 describe main chassis of video recording/playback equipment comprising a number of integrally formed head-drum mountings of varying construction.

According to the present invention, a moving deck plate for a tape recorder is provided and comprises:
a main chassis with a head drum assembly mounted thereon;
a sub-chassis slidably moving toward the head drum assembly on the main chassis upon loading of a tape cassette;
a drum base on which the head drum assembly is mounted, slantingly protruding toward one side of the main chassis;
a pair of stationary guide rails each being formed on either side of the drum base and protruding therefrom;
a pair of movable guide rails provided at the sub-chassis and docked to the pair of stationary guide rails to form a moving path along which a pair of pole bases move to draw a magnetic tape from the tape cassette;
wherein
the drum base is integrally formed with the main chassis;
the pair of stationary guide rails is integrally formed with the main chassis;
a first bridge-type reinforcing rib, integrally formed with the main chassis and the drum base, is arranged to couple a first of the pair of stationary guide rail to the drum base. This provides greater stability of the stationary guide rail and therefore results in improved mechanical driving precision and an improved overall performance of the plate.

Preferably, the moving deck plate further comprises a second bridge-type reinforcing rib to couple a second of the pair of the stationary guide rails to the main chassis.

Preferably, the moving deck plate comprises two or more first and second reinforcing ribs are provided on the moving deck plate.

Preferably, the drum base further comprises a complementary positioning and engaging device, the complementary positioning and engaging device having at least one positioning hole and a plurality of first engaging holes formed on a lower portion of the head drum assembly, wherein a positioning pin is provided at the drum base to be inserted into the positioning hole, and a plurality of second engaging holes are formed on the drum base to allow a fastening member to pass through in correspondence with the first engaging holes.

Preferably, the complementary positioning and engaging device further comprises a rotating shaft protruding downward from the head drum assembly and a shaft receiving groove formed on the drum base to receive the rotating shaft.

Desirably, the positioning pin is integrally shaped with the drum base with the positioning pin being perpendicular relative to a surface of the drum base.

Ideally, the drum base and the pair of stationary guide rails are shaped from a portion of the main chassis by pressing.

Preferably, the drum base is integrally formed with the main chassis, thereby eliminating a separate assembly of the drum base and the main chassis.

Preferably, the sub-chassis moves to dock the movable guide rails to the stationary guide rails, thereby preventing the movable guide rails from being shifted, and allowing precise docking to the movable guide rails.

Desirably, the moving deck plate further comprises a plurality of through-holes formed adjacent to the drum base and the pair of stationary guide rails by punching.

Ideally, the positioning pin is complementary to the positioning hole formed on the lower portion of the head drum assembly to determine a position at which the head drum assembly is seated on the drum base.

Preferably, the shaft-receiving groove is formed on a centre portion of the drum base to determine an engaged position of the head drum assembly, and the rotating shaft is inserted into the shaft-receiving groove.

A method of manufacturing a moving deck plate for a tape recorder is provided and comprises:
mounting a head drum assembly on a main chassis;
sliding a sub-chassis toward the head drum assembly mounted on the main chassis;
forming a pair of moveable guide rails provided at the sub-chassis being dockable to a pair of stationary guide rails to form a moving path along which a pair of pole bases move to draw a magnetic tape from a tape cassette;
integrally forming a drum base with the main chassis at a slantingly protruding position toward one side thereof
integrally forming the pair of stationary guide rails on either side of the drum base and protruding therefrom; and
intregrally forming a first bridge-type reinforcement rib with the main chassis and the drum base, the first bridge-type reinforcement rib being arranged to couple a first of the pair of stationary guide rails to the drum base..

Ideally the method further comprises integrally forming a second bridge-type reinforcing rib to couple a second of the pair of the stationary guide rails to the main chassis.

Preferably the method further comprises integrally forming two or more first and second reinforcing ribs with the main chassis.

Ideally the method further comprises:
forming a plurality of fastening holes on a lower portion of the head drum assembly; and
forming a plurality of engaging holes on the drum base to position the head drum assembly on the drum base.

Desirably the method further comprises:
forming a positioning hole on the lower portion of the head drum assembly; and
forming a positioning pin on the drum base to determine an engaged position at which the head drum assembly is seated on the drum base.

An embodiment of the present invention will now be described, by way of example, with reference to Figures 3 to 6 of the accompanying drawings, in which:
Figure 1 is an exploded view of the deck of a conventional camcorder;

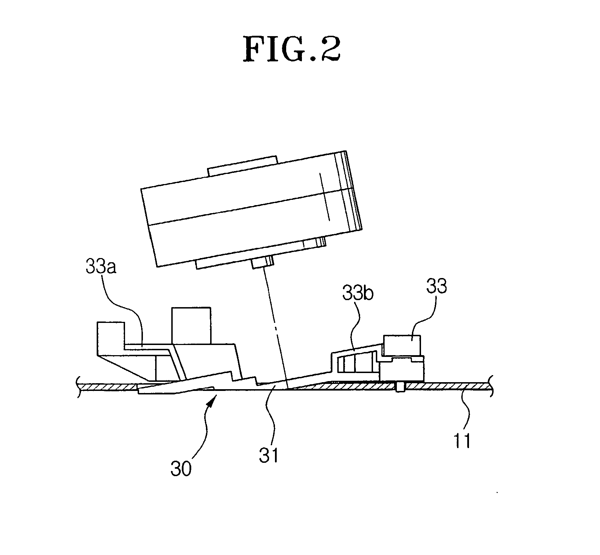

Figure 2 is an exploded cross-sectional view of the head sub-assembly the deck of Figure 1;
Figure 3 is a perspective exploded view of a camcorder deck according to the present invention;
Figures 4 and 5 are perspective views illustrating a moving deck plate for a camcorder according to the present invention; and
Figure 6 is an exploded cross-sectional view of the head sub-assembly the deck of Figure 3;

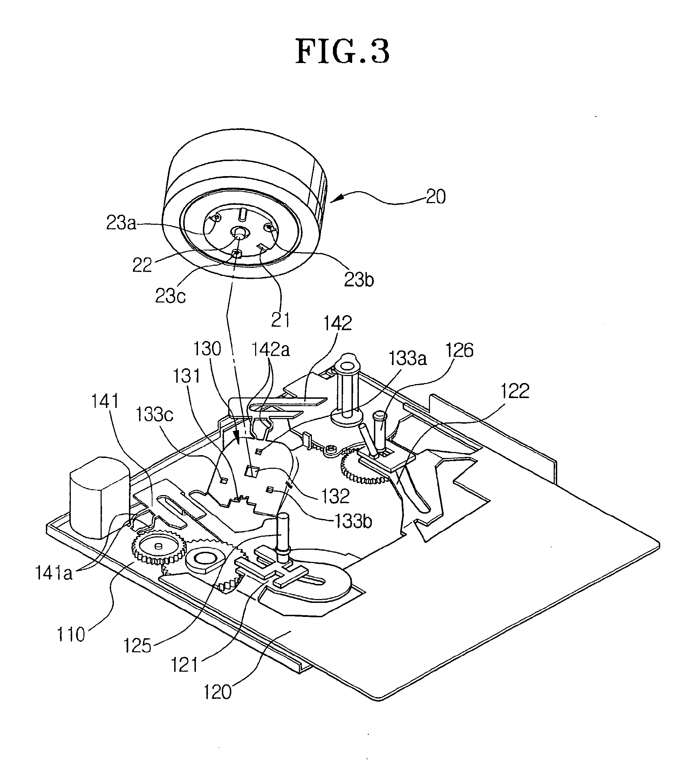

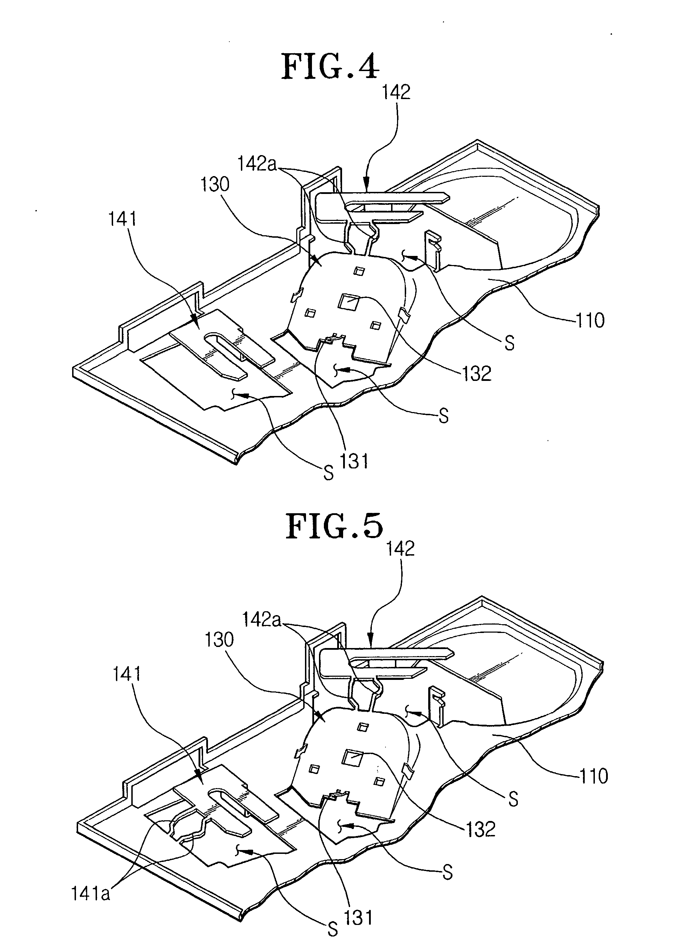

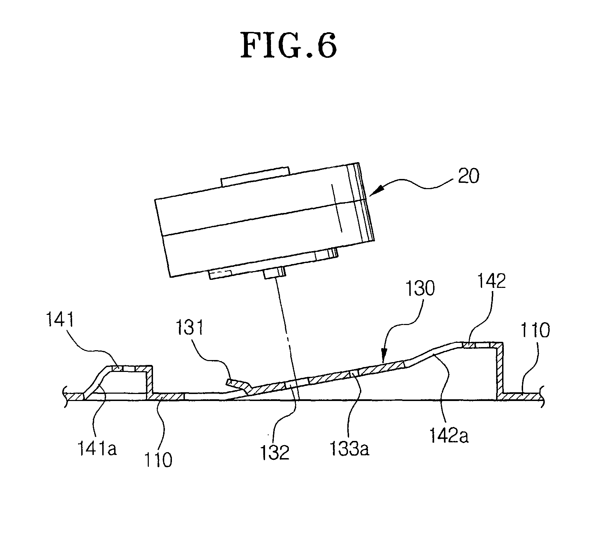

Referring to Figures 3 to 6, a moving deck plate includes a slanted drum base 130 integrally formed on a main chassis 110, on which a head drum assembly 20 is mounted. Since the drum base 130 is integrally formed with the main chassis 110, first and second stationary guide rails 141, 142 protrude on opposite sides of the drum base. The first stationary guide rail 141 is coupled to the drum base 130 by bridge-type reinforcing ribs 142a. The second stationary guide rail 142 may also be coupled to the main chassis 110 by a second bridge-type reinforcing rib 141a, as shown in Figure 5.

The drum base 130 and the stationary guide rails 141, 142 are on the main chassis 110 by, for example, pressing. More specifically, the stationary guide rails 141, 142 are formed by a portion of the main chassis 110 which is cut and bent.

Referring to Figures 4 and 5, a plurality of through-holes S are formed adjacent to the drum base 130 and the pair of stationary guide rails 141, 142 by punching.

Referring to Figure 3, the stationary guide rails 141, 142 form a path along which first and second pair of pole bases 125, 126 move in co-operation with a pair of movable guide rails 121, 122. More specifically, upon loading of a tape cassette (not shown), a sub-chassis 120 is slid toward the head drum assembly 20 on the main chassis 110. Accordingly, the movable guide rails 121, 122, provided at the leading edge of the sub-chassis 120, dock with respective stationary guide rails 141, 142. At this point, the pole bases 125, 126 draw magnetic tape (not shown) from the tape cassette so that the magnetic tape is wound closely halfway around the head drum assembly 20.

The drum base 130 includes a positioning tab 131 to determine an engaged position of the head drum assembly 20. The positioning tab 131 is complementary to a positioning hole 21 formed in the bottom of the head drum assembly 20, to ensuree that the head drum assembly 20 is correctly seated on the drum base 130.

A shaft receiving aperture 132 formed at the centre of the drum base 30 is also provided to set the operational position of the head drum assembly 20. A shaft 22 protrudes from the bottom of the head drum assembly 20 and is inserted into the shaft receiving aperture 132.

The drum base 130 is provided with a plurality of mounting holes 133a, 133b, 133c so that screws can be screwed into a plurality of fastening holes 23a, 23b, 23c in the the head drum assembly 20 to hold it to the drum base 130. The fastening holes 23a, 23b, 23c and the mounting holes 133a, 133b, 133c may be formed during the pressing process that forms the drum base 130 and the stationary guide rails 141, 142.

With the moving deck plate described above, since the drum base 130 is integrally formed with the main chassis 110 in a pressing process, the process of separately assembling the drum base 130 and the head drum assembly 20 is avoided.

In addition, the stationary guide rails 141, 142 are integrally shaped with the main chassis 110 in the process of pressing the main chassis 110. The stationary guide rails 141, 142 are optionally connected to the drum base 130 and the main chassis 110 by bridge-type reinforcing ribs 142a, 141a. When the sub-chassis 120 is moved, the movable guide rails 121, 122 are docked with the stationary guide rails 141, 142. Accordingly, it is possible to prevent the movable guide rails 121, 122 from being shifted, and precise docking is achieved. Therefore, mechanical driving precision is improved for the pole bases 125, 126.

The assembly of the deck will no be described insofar as it relates the present invention.

The rotating shaft 22 protruding from the bottom of the head drum is inserted into the shaft receiving aperture 132 in the drum base 130, while being simultaneously rotated so that the positioning tab 131 is inserted into the positioning hole 21 to set the head assembly's position. The fastening holes 23a, 23b,23c are aligned with respective mounting holes 133a, 133b, 133c and then screws are fastened into the holes, thereby completing the mounting of the head drum assembly 20.

By predetermining the relative positions of the fastening holes 23a, 23b, 23c and the mounting holes 133a, 133b, 133c with respect to each other when mechanically producing the holes, the holes are arranged to be aligned when the positioning tab 131 is aligned with the positioning hole 21.

The drum base 130 is not manufactured as a separate component but is integrally formed with the main chassis 110 thereby eliminating a manufacturing process such as die casting. In addition, since fastening components such as screws may be removed, it is possible to reduce the manufacturing cost by reducing the number of manufacturing processes and the number of components.

The stationary guide rails 141, 142 defining the path of the pole bases 125, 126 are integrally formed with the main chassis 110 in a pressing process. In this process, the free ends of the stationary guide rails 141, 142 may be connected to the drum base 130 and the main chassis 110 by bridge-type reinforcing ribs 141a,142a, and the sub-chassis 120 is prevented from moving thereby providing precise docking with the movable guide rails 121, 122. Accordingly, the pole bases 125, 126 are stably slid, thereby improving the mechanical driving precision and obtaining improved performance of the moving deck plate.

## Claims

1. A moving deck plate for a tape recorder, comprising:
a main chassis (110) with a head drum (20) assembly mounted thereon;
a sub-chassis (120) slidably moving toward the head drum assembly on the main chassis upon loading of a tape cassette;
a drum base (130) on which the head drum assembly is mounted, slantingly protruding toward one side of the main chassis;
a pair of stationary guide rails (142, 141) each being formed on either side of the drum base and protruding therefrom;
a pair of movable guide rails (122, 121) provided at the sub-chassis and docked to the pair of stationary guide rails to form a moving path along which a pair of pole bases (126, 125) move to draw a magnetic tape from the tape cassette;
**characterised in that**
the drum base is integrally formed with the main chassis;
the pair of stationary guide rails is integrally formed with the main chassis;
a first bridge-type reinforcing rib (142a), integrally formed with the main chassis and the drum base, is arranged to couple a first of the pair of stationary guide rail (142) to the drum base.

2. The moving deck plate as claimed in claim 1, further comprising:
a second bridge-type reinforcing rib (141 a) to couple a second of the pair of the stationary guide rails (141) to the main chassis.

3. The moving deck plate as claimed in claim 2, wherein two or more first and second reinforcing ribs are provided on the moving deck plate.

4. The moving deck plate as claimed in any one of the preceding claims, wherein the drum base further comprises:
a complementary positioning and engaging device, the complementary positioning and engaging device having at least one positioning hole (21) and a plurality of first engaging holes (23a, 23b, 23c) formed on a lower portion of the head drum assembly, wherein a positioning pin (131) is provided at the drum base to be inserted into the positioning hole, and a plurality of second engaging holes (131a, 131b, 131c) are formed on the drum base to allow a fastening member to pass through in correspondence with the first engaging holes.

5. The moving deck plate as claimed in claim 4, wherein the complementary positioning and engaging device further comprises:
a rotating shaft (22) protruding downward from the head drum assembly; and
a shaft receiving groove (132) formed on the drum base to receive the rotating shaft.

6. The moving deck plate as claimed either of claims 4 or 5, wherein the positioning pin is integrally shaped with the drum base with the positioning pin being perpendicular relative to a surface of the drum base.

7. The moving deck plate as claimed in any one of the preceding claims, wherein the drum base and the pair of stationary guide rails are shaped from a portion of the main chassis by pressing.

8. The moving deck plate as claimed in any one of the preceding claims, wherein the sub-chassis moves to dock the movable guide rails to the stationary guide rails, thereby preventing the movable guide rails from being shifted, and allowing precise docking to the movable guide rails.

9. The moving deck plate as claimed in any one of the preceding claims, further comprising:
a plurality of through-holes (S) formed adjacent to the drum base and the pair of stationary guide rails by punching.

10. The moving deck plate as claimed in any one of claims 4 to 9, wherein the positioning pin is complementary to the positioning hole formed on the lower portion of the head drum assembly to determine a position at which the head drum assembly is seated on the drum base.

11. The moving deck plate as claimed in any one of claims 5 to 10, wherein the shaft receiving groove is formed on a center portion of the drum base to determine an engaged position of the head drum assembly.

12. The moving deck plate as claimed in any one of claims 5 to 11, wherein the rotating shaft is inserted into the shaft receiving groove.

13. A method of manufacturing a moving deck plate for a tape recorder, comprising:
mounting a head drum assembly (20) on a main chassis (110);
sliding a sub-chassis (120) toward the head drum assembly mounted on the main chassis;
forming a pair of moveable guide rails (122, 121) provided at the sub-chassis being dockable to a pair of stationary guide rails (142, 141) to form a moving path along which a pair of pole bases (126, 125) move to draw a magnetic tape from a tape cassette; and
**characterised by**
integrally forming a drum base (130) with the main chassis at a slantingly protruding position toward one side thereof
integrally forming the pair of stationary guide rails (142, 141) on either side of the drum base and protruding therefrom;
intregrally forming a first bridge-type reinforcement rib (142a) with the main chassis and the drum base, the first bridge-type reinforcement rib being arranged to couple a first of the pair of stationary guide rails to the drum base.

14. The method of claim 13, further comprising:
integrally forming a second bridge-type reinforcing rib (141a) to couple a second of the pair of the stationary guide rails (141) to the main chassis.

15. The method of claim 14, further comprising integrally forming two or more first and second reinforcing ribs with the main chassis.

16. The method of any one of claims 13 to 15, further comprising:
forming a plurality of fastening holes (23a, 23b, 23c) on a lower portion of the head drum assembly; and
forming a plurality of engaging holes (133a, 133b, 133c) on the drum base to position the head drum assembly on the drum base.

17. The method of any one of claims 13 to 16, further comprising:
forming a positioning hole (21) on the lower portion of the head drum assembly; and
forming a positioning pin (131) on the drum base to determine an engaged position at which the head drum assembly is seated on the drum base.

18. The method of claim 17, wherein the positioning pin is integrally shaped with the drum base, with the positioning pin being perpendicular relative to a surface of the drum base.

## Patentansprüche

1. Bewegliche Laufwerksplatte für einen Bandrecorder, umfassend:
ein Hauptgestell (110) mit einer darauf angebrachten Kopftrommelanordnung (20);
ein Untergestell (120), das beim Laden einer Bandkassette in Richtung der Kopftrommelanordnung auf dem Hauptgestell gleitend bewegt ist;
eine Trommelbasis (130), auf welcher die Kopftrommelanordnung angebracht ist, die schräg in Richtung zu einer Seite des Hauptgestells hervorsteht;
ein Paar von feststehenden Führungsschienen (142, 141), wobei jede an einer der beiden Seiten der Trommelbasis gebildet ist und davon hervorsteht;
ein Paar von beweglichen Führungsschienen (122, 121), die an dem Untergestell vorgesehen sind und an dem Paar von feststehenden Führungsschienen anliegen, um einen Bewegungspfad zu bilden, entlang welchem sich ein Paar von Schaftbasen (126, 125) bewegt, um ein Magnetband aus der Bandkassette herauszuziehen;
**dadurch gekennzeichnet, dass**
die Trommelbasis mit dem Hauptgestell integral gebildet ist;
das Paar von feststehenden Führungsschienen mit dem Hauptgestell integral gebildet ist;
eine erste brückenartige Verstärkungsrippe (142a), die mit dem Hauptgestell und der Trommelbasis integral gebildet ist, die dazu ausgelegt ist, eine erste von dem Paar von feststehenden Führungsschienen (142) an die Trommelbasis anzukoppeln.

2. Bewegliche Laufwerksplatte nach Anspruch 1, ferner umfassend:
eine zweite brückenartige Verstärkungsrippe (141a), um eine zweite von dem Paar der feststehenden Führungsschienen (141) an das Hauptgestell anzukoppeln.

3. Bewegliche Laufwerksplatte nach Anspruch 2, wobei zwei oder mehr erste und zweite Verstärkungsrippen an der beweglichen Laufwerksplatte vorgesehen sind.

4. Bewegliche Laufwerksplatte nach einem der vorhergehenden Ansprüche, wobei die Trommelbasis ferner umfasst:
eine ergänzende Positionierungs- und Rastvorrichtung, wobei die ergänzende Positionierungs- und Rastvorrichtung zumindest eine Positionierungsöffnung (21) und eine Mehrzahl von ersten Rastöffnungen (23a, 23b, 23c) hat, die an einem unteren Bereich der Kopftrommelanordnung gebildet sind, wobei ein Positionierungsstift (131) an der Trommelbasis vorgesehen ist, um in die Positionierungsöffnung eingebracht zu werden, und eine Mehrzahl von zweiten Rastöffnungen (131 a, 131 b, 131 c) an der Trommelbasis gebildet sind, um einem Befestigungsbauteil zu ermöglichen, in Übereinstimmung mit den ersten Positionierungsöffnungen hindurch zu passen.

5. Bewegliche Laufwerksplatte nach Anspruch 4, wobei die ergänzende Positionierungs- und Rastvorrichtung ferner umfasst:
eine rotierende Welle (22), die von der Kopftrommelanordnung nach unten vorsteht; und
eine Wellenaufnahmerille (132), die an der Trommelbasis gebildet ist, um die rotierende Welle aufzunehmen.

6. Bewegliche Laufwerksplatte entweder nach Anspruch 4 oder 5; wobei der Positionierungsstift mit der Trommelbasis integral geformt ist, wobei der Positionierungsstift relativ zu einer Oberfläche der Trommelbasis orthogonal ist.

7. Bewegliche Laufwerksplatte nach einem der vorhergehenden Ansprüche, wobei die Trommelbasis und das Paar von feststehenden Führungsschienen durch Pressen aus einem Bereich des Hauptgestells geformt sind.

8. Bewegliche Laufwerksplatte nach einem der vorhergehenden Ansprüche, wobei das Untergestell sich bewegt, um die beweglichen Führungsschienen an den feststehenden Führungsschienen anzulegen, um dabei zu verhindern, dass sich die beweglichen Führungsschienen verschieben, und um präzises Anlegen an den beweglichen Führungsschienen zu erlauben.

9. Bewegliche Laufwerksplatte nach einem der vorhergehenden Ansprüche, ferner umfassend:
eine Mehrzahl von Durchgangsöffnungen (S), die durch Ausstanzen gegenüber der Trommelbasis und dem Paar von feststehenden Führungsschienen gebildet sind.

10. Bewegliche Laufwerksplatte nach einem der Ansprüche 4 bis 9, wobei der Positionierungsstift ergänzend zur Positionierungsöffnung an dem unteren Bereich der Kopftrommelanordnung gebildet ist, um eine Position zu bestimmen, an welcher die Kopftrommelanordnung auf der Trommelbasis sitzt.

11. Bewegliche Laufwerksplatte nach einem der Ansprüche 5 bis 10, wobei die Wellenaufnahmerille an einem mittigen Bereich der Trommelbasis gebildet ist, um eine gerastete Position der Kopftrommelanordnung zu bestimmen.

12. Bewegliche Laufwerksplatte nach einem der Ansprüche 5 bis 11, wobei die rotierende Welle in die Wellenaufnahmerille eingebracht ist.

13. Verfahren zum Herstellen einer beweglichen Laufwerksplatte für einen Bandrecorder, umfassend:
Anbringen einer Kopftrommelanordnung (20) an einem Hauptgestell (110);
Gleiten eines Untergestells (120) in Richtung zur Kopftrommelanordnung, die an dem Hauptgestell angebracht ist;
Bilden eines Paares von beweglichen Führungsschienen (122, 121), die an dem Untergestell anlegbar an ein Paar von feststehenden Führungsschienen (142, 141) vorgesehen sind, um einen Bewegungspfad zu bilden, entlang welchem sich ein Paar von Schaftbasen (126, 125) bewegt, um ein Magnetband aus einer Bandkassette heraus zu ziehen; und
**gekennzeichnet durch**
integrales Bilden einer Trommelbasis (130) mit dem Hauptgestell in einer schräg vorstehenden Position in Richtung zu einer Seite davon;
integrales Bilden des Paares von feststehenden Führungsschienen (142, 141) an beiden Seiten der Trommelbasis und Vorstehen davon;
integrales Bilden einer ersten brückenartigen Verstärkungsrippe (142a) mit dem Hauptgestell und der Trommelbasis, wobei die erste brückenartige Verstärkungsrippe angeordnet ist, eine erste vom Paar der feststehenden Führungsschienen an die Trommelbasis anzukoppeln.

14. Verfahren nach Anspruch 13, weiterhin umfassend:
integrales Bilden einer zweiten brückenartigen Verstärkungsrippe (141a), um eine zweite vom Paar der feststehenden Führungsschienen (141) an dem Hauptgestell anzukoppeln.

15. Verfahren nach Anspruch 14, weiterhin umfassend integrales Bilden von zwei oder mehr ersten und zweiten Verstärkungsrippen mit dem Hauptgestell.

16. Verfahren nach einem der Ansprüche 13 bis 15, ferner umfassend:
Bilden einer Mehrzahl von Befestigungsöffnungen (23a, 23b, 23c) an einem unteren Bereich der Kopftrommelanordnung; und
Bilden einer Mehrzahl von Rastöffnungen (133a, 133b, 133c) an der Trommelbasis, um die Kopftrommelanordnung an der Trommelbasis zu positionieren.

17. Verfahren nach einem der Ansprüche 13 bis 16, weiterhin umfassend:
Bilden einer Positionierungsöffnung (21) an dem unteren Bereich der Kopftrommelanordnung; und
Bilden eines Positionierungsstiftes (131) an der Trommelbasis, um eine gerastete Position zu bestimmen, an welcher die Kopftrommelanordnung an der Trommelbasis sitzt.

18. Verfahren nach Anspruch 17, wobei der Positionierungsstift mit der Trommelbasis integral geformt ist, wobei der Positionierungsstift relativ zu einer Oberfläche der Trommelbasis orthogonal ist.

## Revendications

1. Plaque de platine mobile pour un enregistreur à bande, comprenant :
un châssis principal (110) avec un ensemble de tambour de têtes (20) monté sur celui-ci ;
un sous-châssis (120) pouvant se déplacer de façon coulissante vers l'ensemble de tambour de têtes sur le châssis principal lors du chargement d'une cassette de bande ;
une base de tambour (130) sur laquelle est monté l'ensemble de tambour de têtes, faisant saillie de façon inclinée vers un côté du châssis principal ;
une paire de rails de guidage fixes (142, 141), formés chacun sur chaque côté de la base de tambour et faisant saillie à partir de celle-ci ;
une paire de rails de guidage mobiles (122, 121) situés sur le sous-châssis et accostant la paire de rails de guidage fixes de façon à former un trajet de déplacement le long duquel une paire de bases de pôles (126, 125) se déplacent de façon à tirer une bande magnétique de la cassette de bande ;
**caractérisée en ce que** :
la base de tambour est formée d'un seul tenant avec le châssis principal ;
la paire de rails de guidage fixes est formée d'un seul tenant avec le châssis principal ;
une première nervure de renfort du type pont (142a), formée d'un seul tenant avec le châssis principal et la base de tambour, est agencée de façon à coupler un premier (142) de la paire de rails de guidage fixes à la base de tambour.

2. Plaque de platine mobile selon la revendication 1, comprenant de plus :
une deuxième nervure de renfort du type pont (141a), pour coupler un deuxième (141) de la paire de rails de guidage fixes au châssis principal.

3. Plaque de platine mobile selon la revendication 2, dans laquelle deux ou plusieurs premières et deuxièmes nervures de renfort sont disposées sur la plaque de platine mobile.

4. Plaque de platine mobile selon l'une quelconque des revendications précédentes, dans laquelle la base de tambour comprend de plus :
un dispositif de positionnement et de mise en prise complémentaire, le dispositif de positionnement et de mise en prise complémentaire comportant au moins un trou de positionnement (21) et une pluralité de premiers trous de prise (23a, 23b, 23c) formés sur une partie inférieure de l'ensemble de tambour de têtes, une broche de positionnement (131) étant disposée à la base de tambour afin d'être insérée dans le trou de positionnement, et une pluralité de deuxièmes trous de prise (131a, 131b, 131c) étant formés sur la base de tambour de façon à permettre à un élément de fixation de traverser en correspondance avec les premiers trous de prise.

5. Plaque de platine mobile selon la revendication 4, dans laquelle le dispositif de positionnement et de mise en prise complémentaire comprend de plus :
un arbre rotatif (22) faisant saillie vers le bas à partir de l'ensemble de tambour de têtes ; et
une rainure de réception d'arbre (132) formée sur la base de tambour afin de recevoir l'arbre rotatif.

6. Plaque de platine mobile selon l'une quelconque des revendications 4 ou 5, dans laquelle la broche de positionnement est conformée d'un seul tenant avec le tambour de base, la broche de positionnement étant perpendiculaire par rapport à une surface de la base de tambour.

7. Plaque de platine mobile selon l'une quelconque des revendications précédentes, dans laquelle la base de tambour et la paire de rails de guidage fixes sont conformées à partir d'une partie du châssis principal par pressage.

8. Plaque de platine mobile selon l'une quelconque des revendications précédentes, dans laquelle le sous-châssis se déplace de façon à faire accoster les rails de guidage mobiles sur les rails de guidage fixes, de façon à empêcher ainsi les rails de guidage mobiles d'être décalés, et à permettre un accostage précis avec les rails de guidage mobiles.

9. Plaque de platine mobile selon l'une quelconque des revendications précédentes, comprenant de plus :
une pluralité de trous traversants (S) formés au voisinage de la base de tambour et de la paire de rails de guidage fixes par poinçonnage.

10. Plaque de platine mobile selon l'une quelconque des revendications 4 à 9, dans laquelle la broche de positionnement est complémentaire au trou de positionnement formé sur la partie inférieure de l'ensemble de tambour de têtes de façon à déterminer une position dans laquelle l'ensemble de tambour de têtes est logé sur la base de tambour.

11. Plaque de platine mobile selon l'une quelconque des revendications 5 à 10, dans laquelle la rainure de réception d'arbre est formée sur une partie centrale de la base de tambour de façon à déterminer une position de prise de l'ensemble de tambour de têtes.

12. Plaque de platine mobile selon l'une quelconque des revendications 5 à 11, dans laquelle l'arbre rotatif est inséré dans la rainure de réception d'arbre.

13. Procédé de fabrication d'une plaque de platine mobile pour un enregistreur à bande, comprenant :
le montage d'un ensemble de tambour de têtes (20) sur un châssis principal (110) ;
le coulissement d'un sous-châssis (120) vers l'ensemble de tambour de têtes monté sur le châssis principal ;
la formation d'une paire de rails de guidage mobiles (122, 121) disposés sur le sous-châssis, pouvant accoster une paire de rails de guidage fixes (142, 141) de façon à former un trajet de déplacement le long duquel une paire de bases de pôles (126, 125) se déplacent de façon à tirer une bande magnétique d'une cassette de bande ; et
**caractérisé par** :
la formation d'un seul tenant d'une base de tambour (130) avec le châssis principal dans une position saillant de façon inclinée vers un côté de celui-ci ;
la formation d'un seul tenant de la paire de rails de guidage fixes (142, 141) de chaque côté de la base de tambour, et faisant saillie à partir de celle-ci ;
la formation d'un seul tenant d'une première nervure de renfort du type pont (142a) avec le châssis principal et la base de tambour, la première nervure de renfort du type pont étant agencée de façon à coupler un premier de la paire de rails de guidage fixes à la base de tambour.

14. Procédé selon la revendication 13, comprenant de plus :
la formation d'un seul tenant d'une deuxième nervure de renfort du type pont (141a) pour coupler un deuxième de la paire de rails de guidage fixes (141) au châssis principal.

15. Procédé selon la revendication 14, comprenant de plus la formation d'un seul tenant de deux ou plusieurs premières et deuxièmes nervures de renfort avec le châssis principal.

16. Procédé selon l'une quelconque des revendications 13 à 15, comprenant de plus :
la formation d'une pluralité de trous de fixation (23a, 23b, 23c) sur une partie inférieure de l'ensemble de tambour de têtes ; et
la formation d'une pluralité de trous de prise (133a, 133b, 133c) sur la base de tambour de façon à positionner l'ensemble de tambour de têtes sur la base de tambour.

17. Procédé selon l'une quelconque des revendications 13 à 16, comprenant de plus :
la formation d'un trou de positionnement (21) sur la partie inférieure de l'ensemble de tambour de têtes ; et
la formation d'une broche de positionnement (131) sur la base de tambour afin de déterminer une position de prise dans laquelle l'ensemble de tambour de têtes est logé sur la base de tambour.

18. Procédé selon la revendication 17, dans lequel la broche de positionnement est conformée d'un seul tenant avec la base de tambour, la broche de positionnement étant perpendiculaire par rapport à une surface de la base de tambour.
